# EUROPÄISCHE PATENTANMELDUNG

(11) **EP 2 889 117 A1**
(43) Veröffentlichungstag der Anmeldung: **01.07.2015**
(21) Anmeldenummer: 14194932.1
(22) Anmeldetag: 26.11.2014
(51) Int. Cl.: B29C 45/16, B29C 44/04, B29C 44/08, B62D 5/04

(54) **Gehäuse zur Aufnahme einer Wickelfeder, Wickelfederanordnung, Verfahren zur Herstellung eines solchen Gehäuses, Verfahren zur Herstellung einer solchen Wickelfederanordnung und Kraftfahrzeug mit einer solchen Wickelfederanordnung**

(30) Priorität: 23.12.2013 DE 102013022077
(71) Anmelder: Valeo Schalter und Sensoren GmbH, 74321 Bietigheim-Bissingen (DE)
(72) Erfinder: Gotzig, Heinrich, Dr, 74321 Bietigheim-Bissingen (DE); Foessel, Jochen, 74321 Bietigheim-Bissingen (DE); Illing, Thomas, 74321 Bietigheim-Bissingen (DE)

(57) **Zusammenfassung**

Die Erfindung betrifft Gehäuse zur Aufnahme einer Wickelfeder (20), wobei das Gehäuse ein Mehrkomponenten-Kunststoffgehäuse ist, das wenigstens einen ersten Gehäuseteil (10) mit wenigstens einer Funktionsoberfläche (60) aufweist, und wobei der erste Gehäuseteil (10) einen Gehäusekern (40) und eine den Gehäusekern (40) zumindest teilweise umgebende Schicht (50) aufweist, welche die Funktionsoberfläche (60) bildet, wobei der Gehäusekern (40) durch thermoplastisches Schaumspritzgießen, insbesondere im MuCell®-Verfahren, aus einer ersten Kunststoffkomponente hergestellt ist und die den Gehäusekern (40) zumindest teilweise umgebende Schicht (50), welche die Funktionsoberfläche (60) bildet, aus einer zweiten Kunststoffkomponente hergestellt ist, die später im Spritzgießverfahren auf den Gehäusekern (40) aufgebracht worden ist.

## Beschreibung

Die Erfindung betrifft ein Gehäuse zur Aufnahme einer Wickelfeder, wobei das Gehäuse ein Mehrkomponenten-Kunststoffgehäuse ist, das wenigstens einen ersten Gehäuseteil mit wenigstens einer Funktionsoberfläche aufweist. Dabei weist der erste Gehäuseteil einen Gehäusekern und eine den Gehäusekern zumindest teilweise umgebende Schicht auf, weiche die Funktionsoberfläche bildet. Die Erfindung betrifft außerdem eine Wickelfederanordnung mit einem solchen Gehäuse und einer zumindest teilweise innerhalb des Gehäuses angeordneten Wickelfeder, wie auch ein Verfahren zur Herstellung eines solchen Gehäuses und ein Verfahren zur Herstellung einer solchen Wickelfederanordnung sowie ein Kraftfahrzeug mit einer solchen Wickelfederanordnung.

Wickelfedern sind spiralförmig aufgewickelte Kabel, insbesondere Flachbandkabel, mit mehreren elektrischen Leitern, die elektrisch voneinander isoliert sind. Durch die spiralförmige Aufwicklung, die eine federnde, flexible und damit ausgleichende Kabelverbindung ermöglicht, eignen sich Wickelfedern insbesondere zur Übertragung von Signalen, wie beispielsweise elektrischer Spannung oder dergleichen, zwischen relativ zu einander bewegbaren Komponenten. Wickelfedern werden vor allem in Kraftfahrzeugen eingesetzt, insbesondere zur Signalübertragung zwischen im drehbeweglichen Lenkrad integrierten Komponenten, wie beispielsweise einem Airbag oder einer Lenkradheizung, und zugehörigen, ortsfest im Fahrzeug angeordneten Komponenten, wie beispielsweise einem zugehörigen Airbag-Steuergerät.

Dabei sind die Wickelfedern in der Regel im Lenkrad oder im Lenkstockhebelgehäuse angeordnet, wobei die Wickelfedern dazu direkt im Lenkrad oder dem Lenkstockhebelgehäuse oder in einem separaten Gehäuse aufgenommen sein können, das in das Lenkrad oder den Lenkstockhebel eingesetzt werden kann.

Die Wickelfeder ist dabei in der Regel derart im Gehäuse angeordnet, dass sie sich bei einer Bewegung der einen, mit der Wickelfeder verbundenen und bewegbar angeordneten Komponente, relativ zur anderen, ebenfalls mit der Wickelfedern verbundenen, aber ortsfest angeordneten Komponente innerhalb des Gehäuses, je nach Bedarf, zum Ausgleich der Relativbewegung der Komponenten auf- oder abwickeln kann. Dabei bewegt sich die Wickelfeder in der Regel an wenigstens einer Wand des Gehäuses, insbesondere über wenigstens einen Teil einer Oberfläche des Gehäuses hinweg bzw. gleitet auf dieser entlang. Für einen möglichst geringen Verschleiß der Komponenten, insbesondere der Wickelfeder und des Gehäuses, sowie um störende Laufgeräusche zu vermeiden, sind die betreffenden Oberflächen des Gehäuses so glatt wie möglich ausgeführt.

Gehäuse zur Aufnahme von Wickelfedern bzw. entsprechend ausgebildete Lenkräder bzw. Lenkstockhebelgehäuse sind grundsätzlich aus dem Stand der Technik bekannt, beispielsweise aus der DE 10 2005 053 181 A1, die ein separates Gehäuse zeigt, oder aus der DE 195 11 693 A1, in der ein Lenkstockhaltergehäuse offenbart ist, das zur Aufnahme einer Wickelfeder ausgebildet ist. Aus dem Stand der Technik ist allgemein bekannt, derartige Gehäuse aus Kunststoff herzustellen, insbesondere im Spritzgießverfahren, auch als Mehrkomponenten-Kunststoffgehäuse, insbesondere als 2K-Kunststoffgehäuse, d.h. als 2-Komponenten-Kunststoffgehäuse.

Allgemein sind aus dem Stand der Technik eine Reihe verschiedener Spritzgießverfahren zur Herstellung solcher Gehäuse bekannt. Beim Spritzgießen wird grundsätzlich zunächst der zu verarbeitende Werkstoff plastifiziert und unter Druck in das Spritzgießwerkzeug, welches die Form für das herzustellende Werkstück bildet, eingespritzt. Durch Abkühlung oder eine Vernetzungsreaktion geht der Werkstoff wieder in den festen Zustand über. Ist das Werkstück entsprechend fest, kann die Form bzw. das Werkzeug geöffnet werden und das Werkstück in der Regel als Fertigteil entnommen werden. Beim herkömmlichen Spritzgießen bestimmt die Kavität des Werkzeuges dabei die Form und die Oberflächenstruktur des fertigen Werkstücks, wobei die Form und die Oberflächenstruktur beim herkömmlichen Spritzgießverfahren nahezu frei wählbar sind. Insbesondere können mit dem herkömmlichen Spritzgießverfahren Gehäuse für Wickelfedern hergestellt werden, welche die entsprechenden Anforderungen an die Oberflächenqualität erfüllen.

Es ist Aufgabe der Erfindung, ein alternatives Gehäuse zur Aufnahme einer Wickelfeder bereitzustellen, insbesondere ein derartiges, alternativ hergestelltes Gehäuse, das gegenüber vergleichbaren, üblichen, aus dem Stand der Technik bekannten Gehäusen leichter ausgebildet werden kann, sowie eine Wickelfederanordnung mit einem solchen Gehäuse, ein Verfahren zur Herstellung eines solchen Gehäuses, ein Verfahren zur Herstellung einer solchen Wickelfederanordnung und ein Kraftfahrzeug mit einer solchen Wickelfederanordnung.

Diese Aufgabe wird erfindungsgemäß durch ein Gehäuse zur Aufnahme einer Wickelfeder, durch eine Wickelfederanordnung, durch ein Verfahren zur Herstellung eines solchen Gehäuses, durch ein Verfahren zur Herstellung einer solchen Wickelfederanordnung sowie durch ein Kraftfahrzeug mit einer solchen Wickelfederanordnung mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäßes Gehäuse zur Aufnahme einer Wickelfeder ist ein Mehrkomponenten-Kunststoffgehäuse, das wenigstens einen ersten Gehäuseteil mit wenigstens einer Funktionsoberfläche aufweist, wobei der erste Gehäuseteil einen Gehäusekern und eine den Gehäusekern zumindest teilweise umgebende Schicht aufweist, welche die Funktionsoberfläche bildet. Erfindungsgemäß ist vorgesehen, dass der Gehäusekern durch thermoplastisches Schaumspritzgießen, insbesondere im MuCell®-Verfahren, aus einer ersten Kunststoffkomponente hergestellt ist und die den Gehäusekern zumindest teilweise umgebende Schicht, welche die Funktionsoberfläche bildet, aus einer zweiten Kunststoffkomponente hergestellt ist, die später im Spritzgießverfahren auf den Gehäusekern aufgebracht worden ist.

Bevorzugt ist das erfindungsgemäße Gehäuse zur Anordnung in einem Kraftfahrzeug ausgebildet, insbesondere zur Anordnung in einem zweispurigen Kraftfahrzeug in einem oberen Bereich der Lenksäule. Ein erfindungsgemäßes Gehäuse kann dabei derart ausgebildet sein, dass es in ein Lenkrad des Kraftfahrzeugs eingesetzt werden kann oder in ein Lenkstockhebelgehäuse oder dazwischen angeordnet werden kann. Insbesondere kann ein erfindungsgemäßes Gehäuse wie ein in der DE 10 2005 053 181 A1 beschriebenes Wickelfedergehäuse ausgebildet sein. Ein erfindungsgemäßes Gehäuse kann aber auch, teilweise oder vollständig, durch das Lenkrad oder das Lenkstockhebelgehäuse selbst gebildet sein, d.h. das Lenkrad oder das Lenkstockhebelgehäuse können auch ein erfindungsgemäßes Gehäuse bilden, beispielsweise nach Art eines in der DE 195 11 693 A1 ausgebildeten Gehäuses.

Der erste Gehäuseteil ist dabei ein Teil oder ein Bereich des Gehäuses, der eine Funktionsfläche aufweist. D.h. der erste Gehäuseteil muss nicht zwingend ein separater Gehäuseteil sein und/oder ein separates Bauteil. Entsprechend muss ein erfindungsgemäßes Gehäuse nicht unbedingt mehrteilig ausgebildet sein. Selbstverständlich jedoch kann ein erfindungsgemäßes Gehäuse mehrteilig ausgebildet sein und der erste Gehäuseteil kann ein separater Gehäuseteil sein, d.h. ein separates Bauteil bilden, was bevorzugt auch der Fall ist.

Ist ein erfindungsgemäßes Gehäuse mehrteilig ausgebildet, weist es neben dem ersten Gehäuseteil mit der Funktionsoberfläche vorzugsweise einen oder mehrere weitere Gehäuseteile auf, besonders bevorzugt wenigstens einen Gehäusedeckel oder dergleichen, insbesondere, wenn das Lenkrad oder das Lenkstockhebelgehäuse das erfindungsgemäße Gehäuse bilden.

Als Funktionsoberfläche wird in diesem Zusammenhang eine Oberfläche des Gehäuses, insbesondere des ersten Gehäuseteils bezeichnet, an die Anforderungen hinsichtlich ihrer Oberflächenqualität gestellt sind, wie beispielsweise Rauigkeit oder dergleichen.

Bevorzugt ist die Funktionsoberfläche eine Kontaktfläche, insbesondere eine Abstützfläche zur Abstützung einer im Gehäuse angeordneten Wickelfedern an dieser Fläche, eine Gleitfläche und/oder eine Sichtfläche. Die Funktionsoberfläche kann aber auch eine Dichtfläche oder eine Strömungsfläche sein.

"Thermoplastisches Schaumspritzgießen", das manchmal auch als "Thermoplast-Schaumgießen" (TSG) bezeichnet wird, durch das erfindungsgemäß der Gehäusekern hergestellt wird, ist aus dem Stand der Technik allgemein bekannt. Bei diesem Verfahren handelt es sich um ein physikalisches Schäumverfahren, mit dem sich Schaumstrukturen in thermoplastischen Spritzgießteilen herstellen lassen. Zur Herstellung der Schaumstruktur wird dem zu verarbeitenden Thermoplast-Werkstoff ein Treibmittel, beispielsweise ein Gas, zugesetzt. Das Treibmittel kann dabei je nach Art und Konsistenz bereits dem Granulat zugemischt werden oder der Schmelze im Zylinder in flüssigem Zustand unter hohem Druck hinzugepumpt werden.

Das sogenannte, von der Firma Trexel Inc. entwickelte MuCell®-Verfahren, ist ein spezielles thermoplastisches Schaumspritzgießverfahren, das beispielsweise aus der DE 698 25 498 T2, der Veröffentlichung in der Zeitschrift "Kunststoffe 12/2005, Seite 66 bis 70: Serienfeste Vielseitigkeit beim MuCell®-Spritzgießen" oder der Veröffentlichung "Kunststoffe 10/2012, Seite 151 bis 156: Physikalisches Schäumen ganz leicht gemacht" bekannt ist. Beim MuCell®-Verfahren wird der thermoplastischen Kunststoffschmelze ein inertes Gas, insbesondere entweder Stickstoff oder Kohlendioxid, zugeführt und im Schmelzzylinder zu einer Einphasenlösung gemischt. Beim Einspritzen dieser Einphasenlösung in die Kavität des Spritzgießwerkzeug erfährt das Gemisch einen Druckabfall, was dazu führt, dass das Gas über das Bauteil verteilt nukleiert und Millionen von kleinsten Zellen wachsen. Das Zellwachstum bewirkt die letzte Ausformung der Kavität, wobei die Höhe der Gewichtsreduzierung über den Dosierweg der Schnecke gesteuert wird. Will man also 10 % des Teilegewichts einsparen, so werden über die Schnecke nur 90 % Kunststoffmasse dosiert. Die Bildung der Einphasenlösung und erheblich höhere Einspritzgeschwindigkeiten als beim Kompakt-Spritzgießen sind Voraussetzung für eine homogene, gleichmäßig verteilte Zellstruktur im Bauteil. Mit diesem Verfahren lassen sich Bauteile aus einem mikro-zellulär geschäumten Polymerwerkstoff, insbesondere aus mikro-zellulär geschäumten Thermoplasten herstellen. Die Zellen ersetzen dabei ein definiertes Volumen, was zu einer hinsichtlich des Bauteilgewichts vorteilhaften Dichtereduzierung im Bauteil führt.

Mit dem thermoplastischen Schaumspritzgießen und auch mit dem MuCell®-Verfahren lassen sich somit bei gleichem Volumen leichtere Bauteile herstellen. Allerdings können bisher jedoch, bedingt durch die Schaumstruktur, keine Bauteile mit hohen Anforderungen an die Oberflächenqualität hergestellt werden. D.h. insbesondere zur Herstellung von Bauteilen mit Funktionsoberflächen, wie beispielsweise Sichtoberflächen oder Oberflächen mit einer möglichst geringen Rauigkeit, wie beispielsweise Hochglanzoberflächen oder Gleitflächen, eignet sich das thermoplastische Schaumspritzgießen bzw. das MuCell®-Verfahren bisher nicht.

Durch das erfindungsgemäße, spätere Aufbringen einer Schicht, welche die Funktionsoberfläche bildet, aus einer zweiten Kunststoffkomponente im herkömmlichen Spritzgießverfahren auf den Gehäusekern eines ersten Gehäuseteils eines Gehäuses zur Aufnahme einer Wickelfeder kann dieser Nachteil jedoch überwunden werden, so dass die Vorteile eines durch thermoplastisches Schaumspritzgießen hergestellten Gehäuses, insbesondere die dadurch erreichte Gewichtsreduzierung des Gehäuses, auch für Gehäuse mit einer Funktionsoberfläche genutzt werden können, insbesondere für Gehäuse zur Aufnahme einer Wickelfeder.

Durch das erfindungsgemäße, spätere Aufbringen einer Schicht aus einer zweiten Kunststoffkomponente kann insbesondere die Oberflächenrauheit des Gehäusekerns bzw. des ersten Gehäuseteils reduziert werden, wodurch die damit verbundene Geräuschentwicklung beim Bewegen einer im Gehäuse angeordneten und sich am Gehäuse abstützenden Wickelfeder erheblich reduziert werden kann. Ferner kann der Verschleiß der Komponenten reduziert werden, insbesondere der Verschleiß der Wickelfeder und des Gehäuses.

Somit ermöglicht ein erfindungsgemäßes Gehäuse, die Vorteile eines durch thermoplastisches Schaumspritzgießen bzw. eines im MuCell®-Verfahren hergestellten Gehäuses auch bei einem Wickelfedergehäuse zu nutzen, ohne nachteilige Effekte auf die Geräuschentwicklung oder den Verschleiß zu haben.

Das thermoplastische Schaumspritzgießen eignet sich insbesondere zur Herstellung besonders steifer Gehäuse bzw. Gehäuseteile, da beliebige Wanddickenunterschiede herstellbar sind, ohne dass Einfallstellen entstehen.

Insbesondere durch die Herstellung des Gehäusekerns im MuCell®-Verfahren kann gegenüber einem im herkömmlichen Spritzgießverfahren hergestellten Gehäusekern eine Gewichtsreduzierung von etwa 10 % erreicht werden, bei gleichzeitiger Verkürzung der Zykluszeit und erheblicher Verringerung der benötigten Schließkräfte. Qualitativ zeichnet sich ein derartig hergestellter Gehäusekern ferner durch eine höhere Dimensionsstabilität aus als ein konventionell gefertigter Gehäusekern bzw. erster Gehäuseteil, bei gleichzeitiger Eliminierung eventueller Einfallstellen, die zu inneren Spannungen führen können. Infolgedessen kann auch der Verzug des Gehäuseteils minimiert werden.

Bestehende Spritzgießmaschinen können mit relativ wenig Aufwand für das MuCello®-Verfahren umgerüstet werden. Hierfür wird üblicherweise das Spritzaggregat ausgetauscht, da eine spezielle Schneckengeometrie nötig ist für die Bildung der Einphasenlösung. Alle im Kompakt-Spritzgießen einsetzbaren Thermoplaste, außer LCP (Liquid Crystal Polymer), d.h. Flüssigkristall-Polymere, lassen sich in der Regel auch im MuCell®- Verfahren verarbeiten.

Bevorzugt wird die Schicht aus der zweiten Kunststoffkomponente nach der Herstellung des Gehäusekerns durch ein allgemein aus dem Stand der Technik bekanntes Mehrkomponenten-Spritzgießverfahren, insbesondere durch ein 2K-Spritzgießverfahren, anschließend auf den Gehäusekern aufgetragen, besonders bevorzugt unmittelbar anschließend.

Die erste Kunststoffkomponente ist ein Thermoplast, bevorzugt ein Polyolefin wie Polyethylen oder Polypropylen, oder Acrylnitril-Butadien-Styrol (ABS), Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) oder Polyvinylchlorid (PVC).

Die zweite Kunststoffkomponente ist bevorzugt ebenfalls ein Thermoplast, besonders bevorzugt ebenfalls einer der vorgenannten Thermoplaste. Die zweite Kunststoffkomponente kann aber auch aus jedem beliebigen anderen Werkstoff sein, der sich im Spritzgießverfahren entsprechend verarbeiten lässt. Die erste Kunststoffkomponente und die zweite Kunststoffkomponente können auch aus dem gleichen Werkstoff sein.

In einer bevorzugten Ausführungsform ist die Funktionsoberfläche zumindest teilweise eine Kontaktfläche, d.h. eine zum Kontakt mit einer im Gehäuse angeordneten Wickelfeder vorgesehene Fläche, insbesondere eine zur Abstützung einer im Gehäuse anordbaren Wickelfeder. Besonders bevorzugt ist die Kontaktfläche dabei derart ausgebildet, dass sie ein Bewegen einer im Gehäuse angeordneten und sich an der Kontaktfläche abstützenden Wickelfeder mit reduzierter Reibung ermöglicht im Vergleich zu einer Abstützung unmittelbar am Gehäusekern.

In einer bevorzugten Ausgestaltung ist die Funktionsoberfläche zumindest teilweise eine Gleitfläche, besonders bevorzugt eine zumindest teilweise als Gleitfläche ausgebildete Innenfläche des Gehäuses. Die Gleitfläche ist dabei insbesondere derart ausgebildet, dass sie ein Gleiten einer im Gehäuse angeordneten Wickelfeder auf der Funktionsoberfläche ermöglicht.

D.h. vorzugsweise ist die Funktionsoberfläche derart ausgebildet, dass sie eine Bewegung einer im Gehäuse angeordneten und sich an der Kontaktfläche abstützenden Wickelfeder auf dem ersten Gehäuseteil bzw. über das erste Gehäuseteil mit reduzierter Reibung, insbesondere mit Gleitreibung, bewirkt bzw. ermöglicht gegenüber einer Abstützung der Wickelfeder unmittelbar am Gehäusekern, d.h. gegenüber einer Abstützung der Wickelfeder in einem Bereich am Gehäusekern ohne eine vergleichbare Funktionsoberfläche. Dadurch kann die Geräuschentwicklung, insbesondere das Laufgeräusch einer im Gehäuse angeordneten und sich an der Funktionsoberfläche abstützenden Wickelfeder, erheblich reduziert werden. Ferner kann der Verschleiß der Wickelfeder sowie des Gehäuses reduziert werden.

In einer besonders bevorzugten Ausführungsform ist die Funktionsoberfläche eine Hochglanzoberfläche.

In einer besonders bevorzugten Ausführungsform weist das Gehäuse eine Gehäuseoberfläche mit einer Innenfläche und einer Außenfläche auf, wobei die Funktionsoberfläche einen Teil der Innenfläche des Gehäuses bildet, insbesondere den Teil der Innenfläche, der zur Abstützung einer im Gehäuse angeordneten Wickelfeder vorgesehen ist.

In einer alternativen oder zusätzlichen Ausführungsform bildet die Funktionsoberfläche einen Teil einer Außenfläche des Gehäuses, wobei die Funktionsoberfläche vorzugsweise eine Sichtoberfläche ist, insbesondere eine Class-A-Sichtoberfläche, Als Class-A-Sichtoberfläche werden insbesondere in der Automobilentwicklung sichtbare (Freiform)-Flächen im Exterieur- und Interieur-Bereich bezeichnet. Besonders bevorzugt weist die Funktionsoberfläche Krümmungsstetigkeit auf.

Durch das Aufbringen einer dünnen Schicht aus einer zweiten Kunststoffkomponente, welche eine Funktionsoberfläche bildet, insbesondere eine Sichtoberfläche, können infolge der Erfindung nun auch durch thermoplastisches Schaumspritzgießen oder insbesondere im MuCell®-Verfahren hergestellte, und damit gewichtsreduzierte Gehäuse zur Aufnahme einer Wickelfeder bereitgestellt werden, welche eine als Sichtoberfläche ausgebildete Funktionsoberfläche aufweisen.

Bevorzugt ist die Funktionsoberfläche im Heißkanal-Spritzgießverfahren hergestellt, wobei das Heißkanal-Spritzgießverfahren ein Spritzgießverfahren für thermoplastische Kunststoffe ist, bei dem Anguss und Verteiler durch entsprechende selektive Beheizung des Werkzeugs immer plastisch bleiben, sodass kein Anguss entfernt werden muss. Die dem Heißkanalverfahren analoge Anwendung beim Spritzgießen härtbarer Kunststoffe ist das Kaltkanalverfahren, bei dem es sich um ein dem Heißkanalverfahren analoges Spritzgießverfahren mit "kaltem" Verteilerkanal für härtbare Formmassen handelt.

In einer bevorzugten Ausführungsform weist die die Funktionsoberfläche bildende Schicht eine Schichtdicke von maximal 1 mm auf, vorzugsweise von maximal 0,5 mm, insbesondere von maximal 0,3 mm. D.h. die Schicht ist bevorzugt eine dünne Schicht, insbesondere eine Art Kunststoffhaut.

Eine erfindungsgemäße Wickelfederanordnung weist ein Gehäuse und eine zumindest teilweise innerhalb des Gehäuses angeordnete Wickelfeder auf. Erfindungsgemäß ist vorgesehen, dass das Gehäuse ein vorbeschriebenes, erfindungsgemäßes Gehäuse ist.

In einer bevorzugten Ausführungsform einer erfindungsgemäßen Wickelfederanordnung ist die Funktionsoberfläche des Gehäuses zumindest teilweise eine Kontaktfläche zur Abstützung der im Gehäuse angeordneten Wickelfeder und die Wickelfeder ist derart im Gehäuse angeordnet, dass sie sich zumindest teilweise an der Kontaktfläche abstützt. Die Kontaktfläche ist dabei vorzugsweise derart ausgebildet, dass sie ein Bewegen der im Gehäuse angeordneten und sich an der Kontaktfläche abstützenden Wickelfeder mit reduzierter Reibung ermöglicht gegenüber einer Abstützung der Wickelfedern unmittelbar am Gehäusekern.

Ein erfindungsgemäßes Verfahren zur Herstellung eines Gehäuses zur Aufnahme einer Wickelfeder, insbesondere zur Herstellung eines erfindungsgemäßen Gehäuses, wobei das Gehäuse ein Mehrkomponenten-Kunststoffgehäuse ist, das wenigstens einen ersten Gehäuseteil mit wenigstens einer Funktionsoberfläche aufweist, und wobei der erste Gehäuseteil einen Gehäusekern und eine den Gehäusekern zumindest teilweise umgebende Schicht aufweist, weiche die Funktionsoberfläche bildet, ist gekennzeichnet durch die Schritte: Herstellen des Gehäusekerns des Gehäuseteils durch thermoplastisches Schaumspritzgießen aus einer ersten Kunststoffkomponente und Herstellen der Funktionsoberfläche durch ein späteres, zumindest teilweises Aufbringen einer Schicht aus einer zweiten Kunststoffkomponente auf den Gehäusekern des Gehäuseteils durch Spritzgießen.

Ein erfindungsgemäßes Verfahren zur Herstellung einer Wickelfederanordnung mit einem Gehäuse und einer zumindest teilweise innerhalb des Gehäuses angeordneten Wickeifeder, insbesondere zur Herstellung einer vorbeschriebenen, erfindungsgemäßen Wickelfederanordnung, ist gekennzeichnet durch die Schritte: Herstellen eines Mehrkomponenten-Kunststoffgehäuses, das wenigstens einen ersten Gehäuseteil mit wenigstens einer Funktionsoberfläche aufweist, wobei der erste Gehäuseteil einen Gehäusekern und eine den Gehäusekern zumindest teilweise umgebende Schicht aufweist, welche die Funktionsoberfläche bildet, wobei der Gehäusekern des Gehäuseteils durch thermoplastisches Schaumspritzgießen aus einer ersten Kunststoffkomponente hergestellt wird und die Funktionsoberfläche später durch zumindest teilweises Aufbringen einer Schicht aus einer zweiten Kunststoffkomponente auf den Gehäusekern des Gehäuseteils durch Spritzgießen hergestellt wird, Anordnen der Wickelfeder zumindest teilweise innerhalb des Gehäuses und Verschließen des Gehäuses, ggf. mittels weiterer Gehäuseteile.

In einer bevorzugten Ausführungsform des erfindungsgemäßen Verfahrens zur Herstellung einer Wickelfederanordnung wird die Wickelfeder dabei derart im Gehäuse angeordnet, dass sie sich in einem verschlossenen Zustand des Gehäuses zumindest teilweise an der Funktionsoberfläche abstützt.

Ein erfindungsgemäßes Kraftfahrzeug weist eine vorbeschriebene, erfindungsgemäße Wickelfederanordnung auf.

Die mit Bezug auf das Gehäuse vorgestellten bevorzugten Ausführungsformen und deren Vorteile gelten entsprechend für die erfindungsgemäße Wickelfederanordnung, für das erfindungsgemäße Verfahren zur Herstellung eines solchen Gehäuses sowie für das erfindungsgemäße Verfahren zur Herstellung einer entsprechenden Wickelfederanordnung und für das erfindungsgemäße Kraftfahrzeug. Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1a: schematisch in Schnittdarstellung einen Ausschnitt durch ein Ausführungsbeispiel einer erfindungsgemäßen Wickelfederanordnung,
- Fig. 1b: ein Ausschnitt aus Fig. 1a in vergrößerter Darstellung und
- Fig. 2: schematisch einen Schnitt durch ein Werkzeug in Prinzipdarstellung zur Herstellung eines erfindungsgemäßen Gehäuses während eines Verfahrensschrittes eines erfindungsgemäßen Herstellverfahrens zur Herstellung des erfindungsgemäßen Gehäuses.

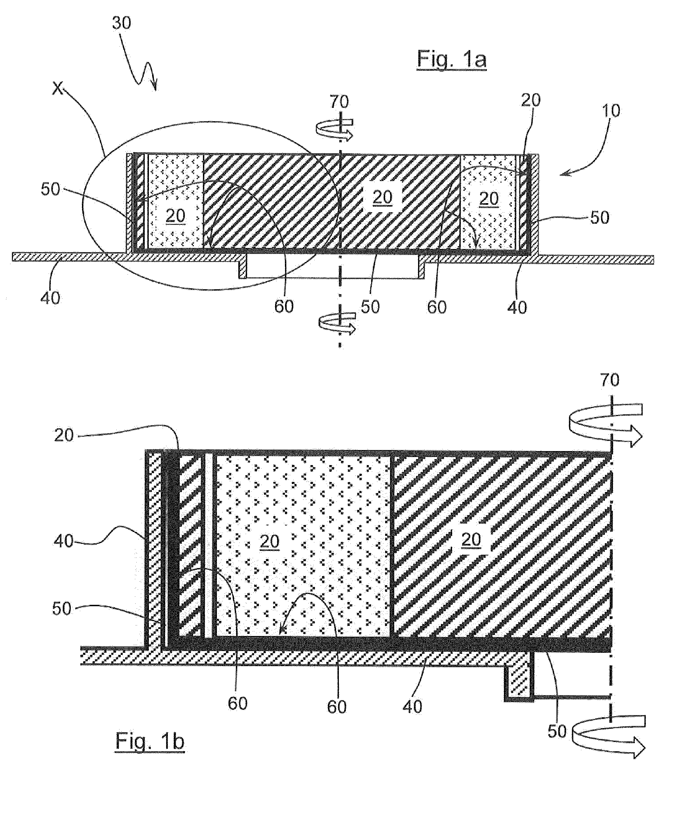

Fig. 1 a zeigt schematisch in Schnittdarstellung einen Ausschnitt durch ein Ausführungsbeispiel einer erfindungsgemäßen Wickelfederanordnung 30 mit einem hier nicht näher bezeichneten, erfindungsgemäßen Gehäuse mit einem ersten Gehäuseteil 10, und einer darin angeordneten Wickelfeder 20.

Das Gehäuse ist bei diesem Ausführungsbeispiel, wie das in der DE 10 2005 053 181 A1 beschriebene Gehäuse, zur Anordnung im Lenkungsstrang ausgebildet, insbesondere für eine Anordnung zwischen einem hier nicht dargestellten, drehbeweglich in einem Kraftfahrzeug angeordneten Lenkrad und einem hier ebenfalls nicht dargestellten, ortsfest im Kraftfahrzeug angeordneten Lenkstockhebelgehäuse. Bei diesem Ausführungsbeispiel eines erfindungsgemäßen Gehäuses wird das Gehäuse durch zwei Gehäuseschalen gebildet, insbesondere durch zwei Gehäusehälften, von denen jedoch nur eine dargestellt ist, und zwar diejenige, welche durch den ersten Gehäuseteil 10 gebildet wird. Dabei ist der erste Gehäuseteil 10 bzw. diese Gehäusehälften diejenige, welche in einem funktionsgemäßen, in einem Kraftfahrzeug verbauten Zustand, dem Lenkrad zugewandt ist, d.h. einer bewegbar im Kraftfahrzeug angeordneten Komponente, und insbesondere mit einer mit dem Lenkrad drehbaren Komponente verbunden werden kann und damit einen Rotor bildet. Selbstverständlich kann der erste Gehäuseteil bei einer anderen erfindungsgemäßen Ausführungsform auch der ortsfest angeordnete Teil des Gehäuses sein, d.h. ein Stator.

Die zumindest teilweise innerhalb des ersten Gehäuseteils 10 und damit zumindest teilweise innerhalb des Gehäuses angeordnete Wickelfeder 20 ist bei diesem Ausführungsbeispiel ein Flachbandkabel mit mehreren elektrisch voneinander isolierten, parallel zueinander verlaufenden elektrischen Leitungen und dient zur Signalübertragung von Signalen zwischen im Lenkrad angeordneten und damit bewegbar im Kraftfahrzeug angeordneten Komponenten, wie beispielsweise einem Airbag, und ortsfest angeordneten Komponenten im Bereich des Lenkstockhebels oder der Lenksäule, wie beispielsweise dem sogenannten "Top Column Modul (TCM)". Die Wickelfeder 20 ist spiralförmig um eine Achse 70 innerhalb des Gehäuseteils 10 aufgewickelt, wobei wenigstens ein hier nicht dargestelltes freies Ende der Wickelfeder 20 aus dem Gehäuse bzw. dem Gehäuseteil 10 zur Verbindung mit der entsprechenden Komponente herausgeführt ist.

Der erste Gehäuseteil 10 weist erfindungsgemäß einen Gehäusekern 40 aus mikrozellulärem thermoplastischem Kunststoff auf, der durch thermoplastisches Schaumspritzgießen im sogenannten MuCell®-Verfahren hergestellt ist. Mit einem im MuCell®-Verfahren hergestellten Gehäusekern 40 kann erfindungsgemäß ein Gehäuse zur Aufnahme einer Wickelfeder 20 bereitgestellt werden, das gegenüber einem vergleichbaren, herkömmlichen, im gewöhnlichen Spritzgießverfahren hergestellten Gehäuse ein geringeres Gewicht aufweist. Dies wirkt sich umso vorteilhafter aus, je größer das Gehäuse ist.

An der Oberfläche des Gehäusekerns 40 ist auf einer Innenseite des Gehäuseteils eine dünne Schicht 50 mit einer Schichtdicke von ca. 0,5 mm aus einer zweiten Kunststoffkomponente aufgetragen, die im Heißkanal-Spritzgießverfahren aufgebracht worden ist und den Gehäusekern 40 wie eine dünne Kunststoffhaut überzieht. Die Schicht 50 bildet dabei eine Funktionsoberfläche 60.

Die innerhalb des ersten Gehäuseteils 10 angeordnete Wickelfeder 20 stützt sich an ihrer Unterseite sowie seitlich an der Funktionsoberfläche 60 ab, vgl. Fig. 1b, die bei diesem Ausführungsbeispiel eine Hochglanzoberfläche ist, die Gleiteigenschaften aufweist. D.h. die Funktionsoberfläche 60 bildet in diesem Fall in vorteilhafter Weise eine Gleitfläche, auf der die Wickelfeder 20 beim Auf- bzw. Abwickeln in Folge einer Relativbewegung der in einem funktionsgemäßen Einbauzustand in einem Kraftfahrzeug mit der Wickelfeder elektrisch kontaktierten Komponenten zueinander, leicht abgleiten kann. D.h. die Funktionsoberfläche 60 ist derart ausgebildet, dass die Wickelfeder 20 bei einer Bewegung mit reduzierter Reibung über die Funktionsoberfläche 60 gleiten kann, so dass ein Verschleiß der Wickelfeder 20 und/oder des Gehäuses, insbesondere des ersten Gehäuseteils 10, minimiert werden kann.

Durch die sehr glatte Funktionsoberfläche 60, d.h. durch die Hochglanzfunktionsoberfläche 60, kann außerdem die Gefahr der Entstehung von Laufgeräuschen deutlich reduziert werden. Insbesondere gegenüber einer Wickelfederanordnung, bei der sich die Wickelfeder 20 unmittelbar auf einem im MuCell®-Verfahren hergestellten Bereich abstützt. Denn verfahrensbedingt weisen durch thermoplastisches Schaumspritzgießen bzw. insbesondere im MuCell®-Verfahren hergestellte Bauteile infolge der Schaumstruktur üblicherweise keine glatte Oberfläche auf.

Durch die auf den Gehäusekern 40 mit der Schaumstruktur aufgebrachte Schicht 50, welche die Funktionsoberfläche 60 bildet, können somit auf einfache und besonders vorteilhafte Weise die Vorteile eines mittels des MuCell®-Verfahrens hergestellten Gehäuses genutzt werden, ohne dass der Verschleiß der Wickelfeder 20 oder des Gehäuses zunimmt, oder dass beim Bewegen der Wickelfeder 20 über den ersten Gehäuseteil 10 Geräusche entstehen. Insbesondere können störende Laufgeräusche der Wickelfedern 20 im Gehäuse vermieden werden, die beispielsweise bei einer Lenkbewegung entstehen können, wenn die Wickelfeder 20 bei einer Lenkbewegung innerhalb des Gehäuses bewegt wird.

Bei dem in den Fig. 1a und 1b gezeigten Ausführungsbeispiel einer Wickelfederanordnung 30 ist die Funktionsoberfläche 60 bzw. die Schicht 50, welche die Funktionsoberfläche bildet und zumindest teilweise auf den Gehäusekern 40 des ersten Gehäuseteils 10 aufgebracht ist, auf einer Innenseite des Gehäuseteils 10 angeordnet. Selbstverständlich kann die Schicht 50 alternativ oder zusätzlich, d.h. in Form einer weiteren Funktionsoberfläche, auch auf einer Außenseite des Gehäuseteils 10 aufgebracht werden, beispielsweise auf einer sichtbaren Außenfläche.

Dies kann in einigen Fällen sogar besonders vorteilhaft sein, da dadurch eine optisch und auch haptisch ansprechende Oberfläche geschaffen werden kann. Insbesondere können somit auf einfache Weise sogenannte Class A-Oberflächen ausgebildet werden, die bei Gehäusen mit einem im MuCell®-Verfahren hergestellten Gehäusekern ansonsten nur mit einer aufwendigen, nachträglichen Oberflächennachbehandlung geschaffen werden können.

Insbesondere wenn ein erfindungsgemäßes Gehäuse zur Aufnahme einer Wickelfedern als Lenkstockhebelgehäuse ausgebildet ist, beispielsweise nach Art eines in der DE 195 11 693 A1 beschriebenen Gehäuses, kann es vorteilhaft sein, wenn das Lenkstockhebelgehäuse einen Gehäusekern aus mikro-zellulärem Polymerschaum aufweist, der zumindest teilweise mit einer Schicht versehen ist, welche die Funktionsoberfläche bildet. Die Schicht mit der Funktionsoberfläche ist dabei vorzugsweise auf einer Innenfläche des Gehäuses in einem Bereich aufgebracht sein, der zur Abstützung einer im Gehäuse anordbaren Wickelfeder vorgesehen ist, und/oder vorzugsweise auf einer Außenfläche des Gehäuses in einem Bereich, der als Sichtoberfläche vorgesehen ist, insbesondere als Class A-Oberfläche. Besonders bevorzugt ist die Schicht, welche die Funktionsoberfläche bildet, dabei sowohl zumindest teilweise auf der Innenfläche des Gehäuses aufgebracht zur Bildung einer Funktionsoberfläche als Kontaktfläche und zumindest teilweise auf der Außenfläche zur Bildung einer Funktionsoberfläche als Sichtoberfläche. Dadurch kann auf einfache Weise ein Gehäuse mit einem geringeren Gewicht gegenüber einem herkömmlichen Gehäuse bereitgestellt werden, dass aber dennoch die Anforderungen an die Oberflächenqualität erfüllt und recht einfach in der Herstellung ist.

Ein erfindungsgemäßes Verfahren zur Herstellung einer Wickelfederanordnung 30 mit einem Gehäuse und einer zumindest teilweise innerhalb des Gehäuses angeordneten Wickelfeder 20, insbesondere zur Herstellung einer vorbeschriebenen, erfindungsgemäßen Wickelfederanordnung 30, ist gekennzeichnet durch die Schritte: Herstellen eines Mehrkomponenten-Kunststoffgehäuses, das wenigstens einen ersten Gehäuseteil 10 mit wenigstens einer Funktionsoberfläche 60 aufweist, wobei der erste Gehäuseteil 10 einen Gehäusekern 40 und eine den Gehäusekern 40 zumindest teilweise umgebende Schicht 50 aufweist, welche die Funktionsoberfläche 60 bildet, wobei der Gehäusekern 40 des Gehäuseteils 10 durch thermoplastisches Schaumspritzgießen aus einer ersten Kunststoffkomponente hergestellt wird und die Funktionsoberfläche 60 später durch zumindest teilweises Aufbringen einer Schicht 50 aus einer zweiten Kunststoffkomponente auf den Gehäusekern 40 des Gehäuseteils 10 durch Spritzgießen hergestellt wird, Anordnen der Wickelfeder 20 zumindest teilweise innerhalb des Gehäuses und Verschließen des Gehäuses, ggf. mittels weiterer Gehäuseteile. Die Wickelfeder ist bei diesem Ausführungsbeispiel dabei derart im Gehäuse angeordnet, dass sie sich in einem verschlossenen Zustand des Gehäuses zumindest teilweise an der Funktionsoberfläche 60 abstützt.

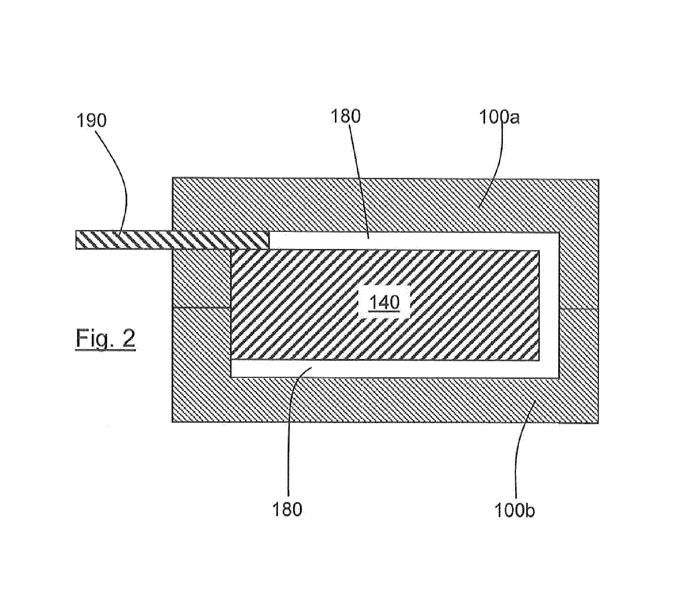

Fig. 2 zeigt in Prinzipdarstellung einen Schnitt durch ein Werkzeug zur Herstellung eines erfindungsgemäßen Gehäuses während eines Verfahrensschrittes eines erfindungsgemäßen Herstellverfahrens zur Herstellung des erfindungsgemäßen Gehäuses, bei dem erfindungsgemäß eine Schicht aus einer zweiten Kunststoffkomponente auf den Gehäusekern 140 eines erfindungsgemäßen Gehäuses aufgebracht wird.

Während dieses, in Fig. 2 nur prinzipiell dargestellten Verfahrensschrittes eines erfindungsgemäßen Verfahrens zur Herstellung eines erfindungsgemäßen Gehäuses ist das Formwerkzeug, dass zwei Werkzeughälften 100a und 100b aufweist, geschlossen. Innerhalb des Werkzeugs befindet sich ein bereits im MuCell®-Verfahren hergestellter Gehäusekern 140. Das Werkzeug ist zum Aufbringen einer Schicht aus einer zweiten Kunststoffkomponente auf den Gehäusekern 140 im Spritzgießverfahren ausgebildet und weist eine entsprechende Werkzeugkavität 180 mit der gewünschten Schichtdicke und Oberflächenstruktur zur Herstellung der Funktionsoberfläche eines erfindungsgemäßen Gehäuses auf.

Nach der Herstellung des Gehäusekerns 140 verbleibt dieser zumindest in einem Teil des Werkzeugs bzw. wird in das Werkzeug eingelegt, je nach Ausgestaltung des zu fertigenden Gehäusekerns 140 und des Werkzeugs, und das Werkzeug wird geschlossen. Dann wird Material, bzw. genauer die zweite Kunststoffkomponente, mittels eines Werkzeugschiebers 190 in die Werkzeugkavität 180 eingespritzt, um die Schicht welche später die Funktionsoberfläche bildet, zumindest teilweise auf die Oberfläche des Gehäusekerns 140 aufzubringen.

Insbesondere wenn der Gehäusekern beispielsweise nur auf einer Seite mit einer Schicht aus einer zweiten Kunststoffkomponente versehen werden soll, im Gegensatz zu dem in Fig. 2 gezeigten Beispiel, ist es vorteilhaft, wenn das Werkzeug derart ausgebildet ist, dass wenigstens eine Werkzeughälfte sowohl zur Herstellung des Gehäusekerns im MuCell®-Prozess eingesetzt werden kann als auch zum Aufbringen der Schicht aus der zweiten Kunststoffkomponente. Dazu verläuft eine Trennfuge im Werkzeug vorzugsweise derart, dass die für das Aufbringen der Schicht erforderliche Aussparung im Werkzeug nur in einer der Werkzeughälften eingearbeitet sein muss. Somit kann der Gehäusekern 140 nach seiner Herstellung im MuCell®-Verfahren in der Werkzeughälfte verbleiben, welche keine zur Herstellung der Schicht mit der Funktionsoberfläche erforderlichen Aussparungen aufweist und es muss zum Aufbringen der Schicht lediglich eine Werkzeughälfte gewechselt werden.

Selbstverständlich ist eine Vielzahl konstruktiver Abwandlungen zu dem erläuterten Ausführungsbeispiel möglich, ohne den Inhalt der Patentansprüche zu verlassen.

## Patentansprüche

1. Gehäuse zur Aufnahme einer Wickelfeder (20), wobei das Gehäuse ein Mehrkomponenten-Kunststoffgehäuse ist, das wenigstens einen ersten Gehäuseteil (10) mit wenigstens einer Funktionsoberfläche (60) aufweist, und wobei der erste Gehäuseteil (10) einen Gehäusekern (40) und eine den Gehäusekern (40) zumindest teilweise umgebende Schicht (50) aufweist, welche die Funktionsoberfläche (60) bildet,
**dadurch gekennzeichnet, dass** der Gehäusekern (40) durch thermoplastisches Schaumspritzgießen, insbesondere im MuCell®-Verfahren, aus einer ersten Kunststoffkomponente hergestellt ist und die den Gehäusekern (40) zumindest teilweise umgebende Schicht (50), welche die Funktionsoberfläche (60) bildet, aus einer zweiten Kunststoffkomponente hergestellt ist, die später im Spritzgießverfahren auf den Gehäusekern (40) aufgebracht worden ist.

2. Gehäuse nach Anspruch 1,
**dadurch gekennzeichnet, dass** die Funktionsoberfläche (60) zumindest teilweise eine Kontaktfläche zur Abstützung einer im Gehäuse anordbaren Wickelfeder (20) ist, wobei die Kontaktfläche vorzugsweise derart ausgebildet ist, dass sie ein Bewegen einer im Gehäuse angeordneten und sich an der Kontaktfläche abstützenden Wickelfeder (20) mit reduzierter Reibung ermöglicht im Vergleich zu einer Abstützung unmittelbar am Gehäusekern (40).

3. Gehäuse nach Anspruch 1 oder 2,
**dadurch gekennzeichnet, dass** die Funktionsoberfläche (60) zumindest teilweise eine Gleitfläche ist, vorzugsweise eine zumindest teilweise als Gleitfläche ausgebildete Innenfläche des Gehäuses, die insbesondere derart ausgebildet ist, dass sie ein Gleiten einer im Gehäuse angeordneten Wickelfeder (20) auf der Funktionsoberfläche (60) ermöglicht.

4. Gehäuse nach einem der vorgenannten Ansprüche,
**dadurch gekennzeichnet, dass** das Gehäuse eine Gehäuseoberfläche mit einer Innenfläche und einer Außenfläche aufweist, wobei die Funktionsoberfläche (60) einen Teil der Innenfläche des Gehäuses bildet, insbesondere den Teil der Innenfläche, der zur Abstützung einer im Gehäuse angeordneten Wickelfeder (20) vorgesehen ist.

5. Gehäuse nach Anspruch 1,
**dadurch gekennzeichnet, dass** die Funktionsoberläche (60) einen Teil einer Außenfläche des Gehäuses bildet, wobei die Funktionsoberfläche (60) vorzugsweise eine Sichtoberfläche ist, insbesondere eine Class-A-Sichtoberfläche.

6. Gehäuse nach einem der vorgenannten Ansprüche,
**dadurch gekennzeichnet, dass** die Funktionsoberfläche (60) im Heißkanal-Spritzgießverfahren hergestellt ist.

7. Gehäuse nach einem der vorgenannten Ansprüche,
**dadurch gekennzeichnet, dass** die die Funktionsoberfläche (60) bildende Schicht (50) eine Schichtdicke von maximal 1 mm aufweist, vorzugsweise von maximal 0,5 mm, insbesondere von maximal 0,3 mm.

8. Wickelfederanordnung (30) mit einem Gehäuse und einer zumindest teilweise innerhalb des Gehäuses angeordneten Wickelfeder (20), **dadurch gekennzeichnet, dass** das Gehäuse nach einem der Ansprüche 1 bis 7 ausgebildet ist.

9. Wickelfederanordnung (30) nach Anspruch 8, **dadurch gekennzeichnet, dass** die Funktionsoberfläche (60) des Gehäuses zumindest teilweise eine Kontaktfläche zur Abstützung der im Gehäuse angeordneten Wickelfedern (20) ist und die Wickelfeder (20) derart im Gehäuse angeordnet ist, dass sie sich zumindest teilweise an der Kontaktfläche abstützt, wobei die Kontaktfläche vorzugsweise derart ausgebildet ist, dass sie ein Bewegen der im Gehäuse angeordneten und sich an der Kontaktfläche abstützenden Wickelfeder (20) mit reduzierter Reibung ermöglicht gegenüber einer Abstützung der Wickelfedern (20) unmittelbar am Gehäusekern (40).

10. Verfahren zur Herstellung eines Gehäuses zur Aufnahme einer Wickelfeder (20), insbesondere zur Herstellung eines Gehäuses, das nach einem der Ansprüche 1 bis 7 ausgebildet ist, wobei das Gehäuse ein Mehrkomponenten-Kunststoffgehäuse ist, das wenigstens einen ersten Gehäuseteil (10) mit wenigstens einer Funktionsoberfläche (60) aufweist, und wobei der erste Gehäuseteil (10) einen Gehäusekern (40) und eine den Gehäusekern (40) zumindest teilweise umgebende Schicht aufweist, welche die Funktionsoberfläche (60) bildet, **gekennzeichnet durch** die Schritte:
- Herstellen des Gehäusekerns (40) des Gehäuseteils (10) **durch** thermoplastisches Schaumspritzgießen aus einer ersten Kunststoffkomponente und
- Herstellen der Funktionsoberfläche (60) **durch** ein späteres, zumindest teilweises Aufbringen einer Schicht (50) aus einer zweiten Kunststoffkomponente auf den Gehäusekern (40) des Gehäuseteils (10) **durch** Spritzgießen.

11. Verfahren zur Herstellung einer Wickelfederanordnung (30) mit einem Gehäuse und einer zumindest teilweise innerhalb des Gehäuses angeordneten Wickelfeder (20), insbesondere zur Herstellung einer Wickelfederanordnung (30), die nach einem der Ansprüche 1 bis 7 ausgebildet ist, **gekennzeichnet durch** die Schritte:
- Herstellen eine Mehrkomponenten-Kunststoffgehäuses, das wenigstens einen ersten Gehäuseteil (10) mit wenigstens einer Funktionsoberfläche (60) aufweist, wobei der erste Gehäuseteil (10) einen Gehäusekern (40) und eine den Gehäusekern (40) zumindest teilweise umgebende Schicht (50) aufweist, welche die Funktionsoberfläche (60) bildet, wobei der Gehäusekern (40) des Gehäuseteils (10) **durch** thermoplastisches Schaumspritzgießen aus einer ersten Kunststoffkomponente hergestellt wird und die Funktionsoberfläche (60) später **durch** zumindest teilweises Aufbringen einer Schicht (50) aus einer zweiten Kunststoffkomponente auf den Gehäusekern (40) des Gehäuseteils (10) **durch** Spritzgießen hergestellt wird,
- Anordnen der Wickelfeder (20) zumindest teilweise innerhalb des Gehäuses und
- Verschließen des Gehäuses, ggf. mittels weiterer Gehäuseteile.

12. Verfahren nach Anspruch 11, **dadurch gekennzeichnet, dass** die Wickelfedern (20) derart im Gehäuse angeordnet wird, dass sie sich in einem verschlossenen Zustand des Gehäuses zumindest teilweise an der Funktionsoberfläche (60) abstützt.

13. Kraftfahrzeug mit einer Wickelfederanordnung (30), **dadurch gekennzeichnet, dass** die Wickeifederanordnung (30) nach Anspruch 8 oder 9 ausgebildet ist.
